# EUROPEAN PATENT SPECIFICATION

(11) **EP 0 965 096 B1**
(45) Date of publication and mention of the grant of the patent: **26.11.2003**
(21) Application number: 98908326.6
(22) Date of filing: 04.03.1998
(51) Int. Cl.: G06K 7/10

(54) **DEVICE FOR SCANNING A CODE ON AN OBJECT**
VORRICHTUNG ZUM ABTASTEN EINES CODES AUF EINEM GEGENSTAND
DISPOSITIF DE BALAYAGE D'UN CODE PRESENT SUR UN OBJET

(30) Priority: 05.03.1997 NL 1005443
(43) Date of publication of application: 22.12.1999
(73) Proprietor: Scantech International B.V., 3812 RJ Amersfoort (NL)
(72) Inventor: BOERSMA, Gerrit, NL-3984 NH Odijk (NL); VAN DER HOOFT, Cornelis, Alexander, Ernestus, NL-3815 SV Amersfoort (NL)
(74) Representative: Van Someren, Petronella F. H. M.
(86) International application number: NL9800126
(87) International publication number: WO98039726

(56) References cited:
- EP-A- 0 524 029
- US-A- 4 866 257
- US-A- 5 067 088

## Description

Scanners for scanning bar codes are now generally known, for instance for use at checkouts in supermarkets. Currently seen more and more are scanners which are capable of directing radiation on the object from two different directions, so that a cashier no longer has to make any ergonomically difficult wrist movement in order to move the objects with the pattern for scanning in a determined direction over a window.

The drawback of such scanners is that they are quite expensive to acquire, also on account of the development of this scanner of wholly new type. Users, including new buyers, are immediately faced with the choice of whether or not to place such a scanner in their stores or industrial environment.

The present invention relates to a device for scanning at least one code on an object according to the preamble of claim 1. Such a device is disclosed in US-A-4866257.

Further is known from US-A-5067088 a mass-mailing system comprising a first and second module, wherein the master processor of the second module processes codes from both modules. However, the electronic parts of the two modules are not identical.

It is an object of the present invention to improve upon the above mentioned devices and methods. This object is achieved by the device and method according to claims 1 and 7 respectively.

The present invention enables a user to first acquire a scanner of tested design, onto which a scanner, which at least in respect of the electronics is identically constructed, can later be connected in simple manner.

An additional important advantage is the fact that with two or more coupled scanning devices the scanning process can continue even if one thereof requires repair.

In preference a first scanning device is provided beforehand with software which, by means of an external operation, i.e. wherein the housing of the scanner can remain closed, can make the first scanning device suitable for use with a second scanning device which is coupled thereto using one or more electrical cables. This external operation can for instance take place using a switch or other external conversion.

Further advantages, features and details of the present invention will be elucidated in the light of the following description of a preferred embodiment thereof with reference to the annexed drawing, in which:
figure 1 shows a block diagram of a preferred embodiment of the device according to the present invention;
figure 2 shows a block diagram in more detail of a part of the device of figure 1;
figures 3A-E show respective graphs of a preferred embodiment of a method according to the present invention, wherein the device of figures 1 and 2 is used; and
figure 4 shows a flow chart in which the method of figures 3A-E is further elucidated.

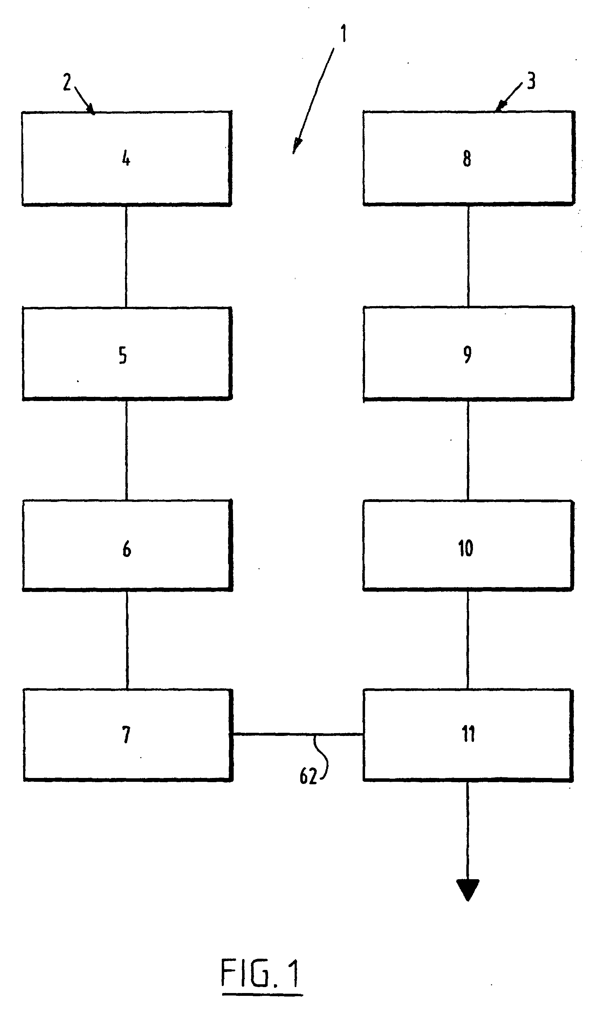

A scanning device 1 (fig. 1) comprises two respective modules 2, 3, for instance as described in the non-prepublished Netherlands patent applications 1003957 and 1004654 of applicant, wherein the former relates to a scanning device in upright position while the latter relates to a scanner in lying position.

Optics 4 of module 2 comprise the following components (not shown): a laser for transmitting the scanning radiation, a rotatably arranged polygonal mirror in addition to fixedly deployed mirrors for projecting the radiation outward through a window. Via these same mirrors the radiation scattered by a bar code is received by a radiation detector, whereafter schematically designated analog electronics 5 provide amplification, filtering and detection of transitions from light to dark and dark to light transitions in the bar code.

In digital electronics which are connected to the analog electronics but preferably arranged on a separate board, the time duration between transitions from light to dark and transitions from dark to light are determined and if possible a bar code is recognized from a series of such times, wherein this may also be a portion thereof, for instance half a bar code. A microprocessor part 7 is connected to the digital electronics 6. In similar manner a module 3 comprises optics 8, for instance embodied slightly differently from the optics 4 on account of the respective horizontal and vertical arrangement, analog electronics 9, digital electronics 10 and a microprocessor part 11, wherein microprocessor 11 produces an output signal for a checkout system if a whole bar code is recognized, wherein a bleep signal and a light signal are generated. The parts 5 and 9, 6 and 10 and 7 and 11 are identical for each of the modules, which reduces production costs. Microprocessor parts 7 and 11 are coupled via a serial port present on the 62. microprocessor via a serial connecting line 62.

In a preferred embodiment (not shown) the processor part 11 can be connected as master to more than one processor part, i.e. such as slave 7.

It is further noted that in the above stated preferred embodiment the scanner 3 disposed in lying position is connected to the cash register. It is also conceivable for the vertically disposed scanner to be connected to the cash register, while it is equally conceivable for each of the scanners to be connected individually thereto.

In a first preferred embodiment the decoded codes or portions thereof are immediately transmitted by processor part 7 to master 11 which evaluates these codes together with the codes from digital electronics 10 and determines whether a particular code has been recognized.

As will become apparent from the following, this merging requires only little modification of existing software, since the processing principle in processor 11 does not change, or hardly so.

It is likewise conceivable when a single scanner is installed for the required software to be already included therein for a possible later connection to a second scanner. It is then preferably possible, using an external operation, to adjust the scanner to the fact that it now comprises a master and a slave scanning device.

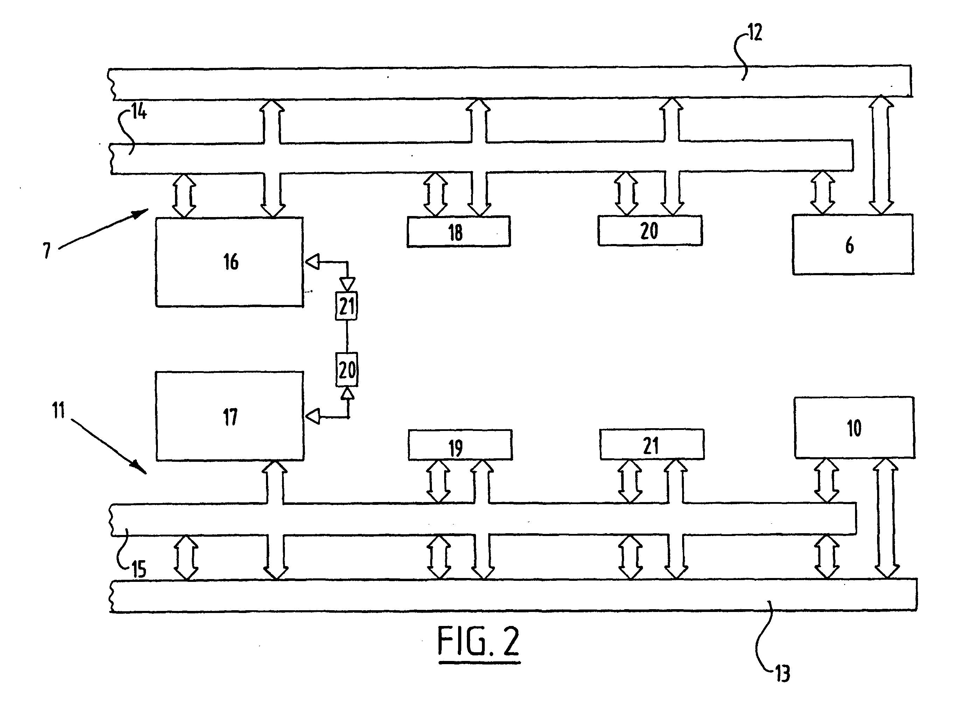

The processor part 7 (figure 2) and processor part 11 each comprise an address bus 12 respectively 13 in addition to a data bus 14 respectively 15 onto which are connected microprocessors 16 respectively 17, in addition to ROMs 18 respectively 19, RAMs 20 respectively 21 and digital electronics 6 respectively 10, which in the present embodiment comprise an ASIC. Processors 16 and 17 are mutually connected via interfaces 20 respectively 21 via a serial port.

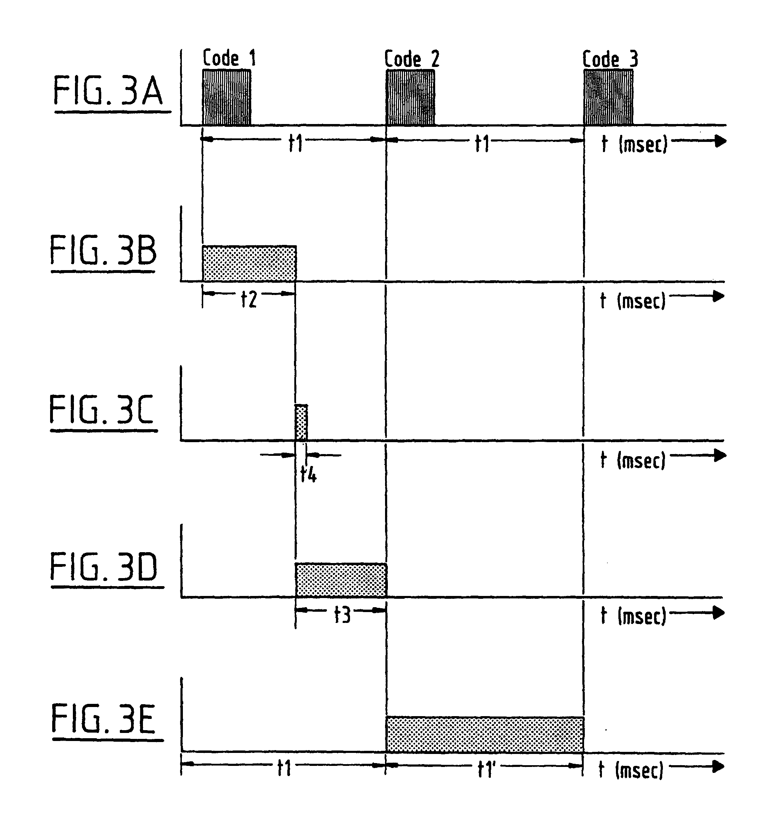

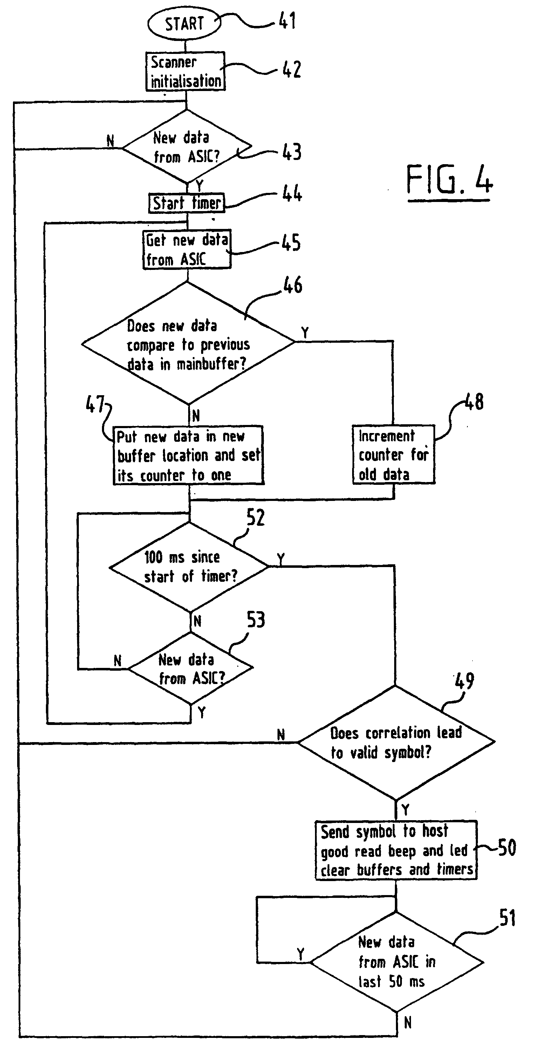

With reference to figures 3A-3E and figure 4 the operation of the device according to figures 1 and 2 will be elucidated below.

Figure 3A shows that for time periods t1, in the present case 750 ms, one code at a time is analyzed and/or recognized (or no code is recognized). For a time period t2 a search is made by processor 17 of module part 11 as to whether a code or portion thereof originating from ASIC 10 or ASIC 6 via processor 16 is recognized. t2 amounts for instance to 100 ms. For a time period t3 (fig. 3D) recognition is blocked, wherein a sound and/or light signal is also generated for a short period of for instance 60 ms (t4, figure 3C). In the example of figure 3D, t3 has a duration of (t1-t2)=650 ms. Further indicated in figure 3E is that, after a period t1, recognition of the same code originating with a probability bordering on certainty from the same product remains blocked for the subsequent period t1'.

As will be apparent from the description above, the operation of the software in processor 17 is similar to the situation where only codes or code fragments originating from the associated ASIC 10 were to be available.

In the flow chart of figure 4 the scanner is initialized after the start at 42, whereafter it is determined at 43 whether or not new data is available from the ASIC, whereafter in the affirmative case a timer 44 is started. At 45 new data is retrieved from the ASIC and at 46 this is compared with previous data in the main buffer. If it is the same as the data stored earlier in the RAM, a counter for the old data is incremented at 48. If the data is not the same, the new data is placed in the new buffer and the counter is set to one at 47. At 52 is determined whether or not 100 ms have elapsed since the start of the timer, while at 53 is checked whether new data originating from the ASIC is available.

If at 49 no valid symbol is found, the procedure is repeated, while in an affirmative case the found symbol is transmitted at 50 to the checkout system, a sound and light signal is generated and the buffer and timer are cleared. After a wait loop at 51 in order to complete the last 650 ms, a new cycle is then started.

The present invention is not limited to the above described preferred embodiment thereof. The rights applied for are defined by the following claims, within the scope of which many modifications can be envisaged by a skilled person in this technical field.

It is noted in this respect that the above described embodiment relates to coupling of a horizontal and a vertical scanner, wherein one of the two functions as master and the other as slave. It is however possible in similar manner to mutually couple two or more horizontal or vertical scanners, while it is also conceivable to have mutually coupled microprocessors perform multiple tasks, which may be desirable for instance for industrial applications.

In such an application, for instance for recognition of CDs or books on a conveyor belt, two or more scanning devices can be actively coupled to a presence sensor such as a photocell in order to generate a signal when the object is present. The scanning devices either give a recognition signal or not when the bar code is read, from which it can then be concluded, as the case arises, that an object which has passed by has not been recognized.

## Claims

1. A device for scanning at least one code on an object, said device comprising two or more modules (2,3), each module comprising: an optics part (4,8) for transmitting radiation and receiving radiation scattered by the code, and an electronics part (5-7; 9-11) for detecting the code from the received radiation; wherein each electronics part comprises a processor (7,11), and the relevant electronics parts of two said modules are mutually connected via an electric line (62) and wherein the processor of one of the electronics parts is arranged for processing the codes or portions thereof originating from both modules, **characterized in that** the hardware of each electronics part (5-7; 9-11) is identical.

2. A device as claimed in claim 1, wherein each electronics part further comprises an analog operating part
(5, 9) for amplification, filtering and detection of transitions from light to dark and a digital part (6, 7, 10, 11) in which the time period between the transitions determined by the analog part is detected.

3. A device as claimed in claim 2, wherein the digital parts each comprise an ASIC in addition to the processor.

4. A device as claimed in claim 1, 2 or 3, wherein the electronics parts are mutually connected via a serial port (20,21) of each of the associated processors.

5. A device as claimed in any of the claims 1-4, wherein in at least one of the modules software for mutual coupling is stored in the hardware.

6. A device as claimed in any of the claims 1-5, wherein in one of the modules software is incorporated which can be externally activated such that it is able to process data originating from two coupled modules.

7. A method for scanning at least one code on an object, wherein a device as claimed in any of the claims 1-6 is used.

8. A method as claimed in claim 7, wherein for a certain sampling time (t₂) the codes or portions thereof are or are not detected by the processor and after the sampling time a certain blocking time (t₃) is observed.

9. A method as claimed in claim 8, wherein after the blocking time (t₃) a second blocking time (t₁') is observed for recognition of an identical code portion.

## Patentansprüche

1. Einrichtung zum Scannen von mindestens einem Code auf einem Objekt,
wobei die Einrichtung zwei oder mehr Module (2, 3) aufweist, wobei jedes Modul aufweist:
ein Optikteil (4, 8) zum Übertragen von Strahlung und Empfangen von Strahlung, die durch den Code gestreut ist, und ein Elektronikteil (5-7; 9-11) zum Erfassen des Codes aus der empfangenen Strahlung;
worin jedes Elektronikteil einen Prozessor aufweist und die relevanten Elektronikteile von zwei der Modulen miteinander über eine elektrische Leitung (62) verbunden sind und worin der Prozessor von einem der Elektronikteile zum Verarbeiten von Codes oder Teilen davon ausgelegt ist, die von beiden Modulen herrühren;
**dadurch gekennzeichnet,**
**daß** die Hardware von jedem Elektronikteil (5-7; 9-11) identisch. ist.

2. Einrichtung nach-Anspruch 1, bei der jedes Elektronikteil weiter ein Analogbetriebsteil (5, 9) für Verstärkung, Filtern und Erfassen von Übergängen von hell zu dunkel und ein Digitalteil (6, 7, 10, 11) aufweist, in dem die Zeitdauer zwischen den Übergängen, die von dem Analogteil bestimmt sind, erfaßt wird, aufweist.

3. Einrichtung nach Anspruch 2, bei der die Digitalteile jeweils eine ASIC zusätzlich zu dem Prozessor aufweisen.

4. Einrichtung nach Anspruch 1, 2 oder 3, bei der die Elektronikteile gegenseitig über einen seriellen Port (20, 21) von jedem der zugehörigen Prozessoren verbunden sind.

5. Einrichtung nach einem der Ansprüche 1 bis 4, bei der mindestens eine der modularen Softwares zum gegenseitigen Verbinden in der Hardware gespeichert ist.

6. Einrichtung nach einem der Ansprüche 1 bis 5, bei der eine der Modulsoftwares eingebaut ist, die extern derart aktiviert werden kann, daß sie die Daten verarbeiten kann, die von zwei gekoppelten Modulen herrühren.

7. Verfahren zum Abtasten von mindestens einem Code auf einem Objekt, worin eine in einem der Ansprüche 1 bis 6 beanspruchte Einrichtung benutzt wird.

8. Verfahren nach Anspruch 7, bei dem während einer bestimmten Abtastzeit (t2) die Codes oder Teile davon durch den Prozessor erfaßt werden oder nicht erfaßt werden und nach der Abtastzeit einer bestimmte Blockierungszeit (t3) beobachtet werden.

9. Verfahren nach Anspruch 8, bei dem nach der Blockierungszeit (t3) eine zweite Blockierungszeit (t1') zum Erkennen eines identischen Codeabschnittes beachtet wird.

## Revendications

1. Dispositif permettant de scanner au moins un code sur un objet, ledit dispositif comprenant deux ou plus de deux modules (2, 3), chaque module comprenant : une partie optique (4, 8) permettant de transmettre un rayonnement et de recevoir un rayonnement diffusé par le code, et une partie électronique (5 à 7 ; 9 à 11) permettant de détecter le code à partir du rayonnement reçu ; dans lequel chaque partie électronique comprend un processeur (7, 11), et les parties électroniques appropriées de deux desdits modules sont connectées mutuellement par l'intermédiaire d'une ligne électrique (62) et dans lequel le processeur de l'une des parties électroniques est conçue pour traiter les codes ou des parties de ceux-ci provenant des deux modules, **caractérisé en ce que** la partie matérielle est identique pour chaque partie électronique (5 à 7 ; 9 à 11).

2. Dispositif selon la revendication 1, dans lequel chaque partie électronique comprend en outre une partie fonctionnant en analogique (5, 9) permettant d'amplifier, de filtrer et de détecter les transitions entre lumière et obscurité et une partie numérique (6, 7, 10, 11) dans laquelle l'intervalle de temps entre les transitions déterminées par la partie analogique est détecté.

3. Dispositif selon la revendication 2, dans lequel les parties numériques comprennent chacune un circuit ASIC en plus du processeur.

4. Dispositif selon la revendication 1, 2 ou 3, dans lequel les parties électroniques sont connectées mutuellement par l'intermédiaire d'un port série (20, 21) de chacun des processeurs correspondants.

5. Dispositif selon l'une quelconque des revendications 1 à 4, dans lequel au moins l'un des logiciels de couplage inter-éléments des modules est stocké dans la partie matérielle.

6. Dispositif selon l'une quelconque des revendications 1 à 5, dans lequel l'un des logiciels des modules est intégré et peut être activé de manière externe de façon à pouvoir traiter des données provenant de deux modules couplés.

7. Procédé permettant de scanner au moins un code sur un objet, dans lequel est utilisé un dispositif tel que décrit dans l'une quelconque des revendications 1 à 6.

8. Procédé selon la revendication 7, dans lequel, pour un temps d'échantillonnage (t₂) donné, les codes ou des parties de ceux-ci sont ou ne sont pas détectés par le processeur et dans lequel un temps de blocage donné (t₃) est observé après le temps d'échantillonnage.

9. Procédé selon. la revendication 8, dans lequel, après le temps de blocage (t₃), un second temps de blocage (t₁') est observé pour permettre la reconnaissance d'une partie de code identique.
